# EUROPÄISCHE PATENTSCHRIFT

(11) **EP 2 101 013 B1**
(45) Veröffentlichungstag und Bekanntmachung des Hinweises auf die Patenterteilung: **25.05.2011**
(21) Anmeldenummer: 08011977.9
(22) Anmeldetag: 03.07.2008
(51) Int. Cl.: E04F 19/04

(54) **Leistenartige Vorrichtung zur Montage im Übergangsbereich zwischen Boden und Wand bzw. Möbelstück und Wand**
Band-form device for mounting in the intersection between wall and floor or furniture and wall
Dispositif inguinal destiné au montage dans la zone de dépassement entre le sol et le mur ou entre une pièce de meuble et un mur

(30) Priorität: 12.03.2008 DE 102008013971
(43) Veröffentlichungstag der Anmeldung: 16.09.2009
(73) Patentinhaber: Kniaziewicz, Malgorzata, 45768 Marl-Polsum (DE)
(72) Erfinder: Kniaziewicz, Malgorzata, 45768 Marl-Polsum (DE)
(74) Vertreter: Ostriga, Sonnet, Wirths & Roche

(56) Entgegenhaltungen:
- DE-U1-202005 012 466
- DE-U1-202007 002 816

## Beschreibung

Die Erfindung betrifft eine leistenartige Vorrichtung zur Montage im Übergangsbereich zwischen Boden und Wand bzw. Möbelstück und Wand - auch Sockelleiste genannt - mit einer wahlweise zum Beispiel an einen Bodenbelag angepassten, von der Wand beabstandeten Sichtfläche, deren oberer sowie unterer Randbereich möglichst abdichtend an der Wand anliegt sowie einem im Hohlraum zwischen Wand und Sichtfläche angeordneten Kanal zur Aufnahme von Kabeln od. dgl., dessen Rückwand der Befestigung der Sockelleiste an der Wand dient und dessen Vorderwand als stoffschlüssig, mittels eines koextrudierten Gelenkbereichs aus Weichkunststoff angeordnete Verschlussleiste ausgebildet ist.

Derartige Sockelleisten sind aus dem nicht druckschriftlich belegbaren Stand der Technik bekannt. Sie haben grundsätzlich den Vorteil, dass sie nicht nur einen Abschluss für einen Bodenbelag bilden, sondern darüber hinaus der Zwickelbereich zwischen Boden und Wand zur Verlegung von Kabeln od. dgl. ausgenutzt werden kann. Eine gattungsgemäße Sockelleiste ist ferner aus DE 20 2007 002 816 U1 bekannt.

Bei den bekannten Sockelleisten reicht häufig der im integrierten Kabelkanal vorhandene Raum nicht für die zu verlegenden Kabel aus, so dass der vorhandene Platz oberhalb und unterhalb des Kabelkanals bis hin zu den Anlagebereichen an Boden und Wand zusätzlich für Kabel od. dgl. ausgenutzt wird.

Dies führt dazu, dass auf nachteilige Weise beim Entfernen eines Kabels bzw. bei einer Neuverlegung eines Kabels in diesem Bereich die Sockelleiste immer wieder vollständig entfernt werden muss. Hinzu kommt, dass diese aus dem Stand der Technik bekannten Sockelleisten nur eine geringe, der Befestigung an der Wand dienende Anlagefläche aufweisen sowie eine relativ geringe Stabilität.

Aus den oben geschilderten Gründen besteht die Aufgabe der Erfindung darin, eine neue Sockelleiste zu schaffen, die ein größeres Platzangebot für Kabel zur Verfügung stellt, eine größere Stabilität aufweist sowie handhabungsfreundlich ist, wobei die Herstellungskosten zugleich möglichst gering sein sollten.

Die Lösung der Aufgabe ergibt sich aus den Merkmalen des Anspruches 1, insbesondere den Merkmalen des Kennzeichenteils, wonach zwischen Sichtfläche und Wand zwei den Hohlraum ausnutzende Kanäle übereinander ausgebildet sind, deren koextrudierte Gelenkbereiche gering voneinander beabstandet nahe einer Wand zwischen den Kanälen angeordnet sind und dass die beiden Verschlussleisten eine gegenläufige Öffnungsrichtung aufweisen.

Die erfindungsgemäße Lösung hat zunächst einmal den Vorteil, dass sie in den beiden vorhandenen Kanälen einen wesentlich größeren, jederzeit zugänglichen Stauraum für Kabel od. dgl. aufweist.

Darüber hinaus ist durch die wabenartige Konstruktion sowie die große Anlagefläche an der Wand einerseits eine höhere Stabilität sowie andererseits eine sicherere Befestigung an der Wand möglich.

Letztlich besteht ein wesentlicher Vorteil in der speziellen, gering beabstandeten Anordnung der aus Weichkunststoff koextrudierten Gelenkbereiche, durch die sich werkzeugtechnische Vorteile bei einer gleichzeitigen Extrusion von Weich- und Hartkunststoffbereichen ergeben. Durch die symmetrische Verteilung der Weichkunststoffbereiche innerhalb des Hartkunststoffprofils ergeben sich nämlich bei der Herstellung Vorteile im Hinblick auf die gleichmäßige Abkühlung, wodurch sich die Maßgenauigkeit und damit die Produktionssicherheit erhöhen und der Herstellungspreis sich erniedrigt.

Bei einer vorteilhaften Ausführungsform der Erfindung sind die Verschlussleisten als linienhafte Klemm- bzw. Rastmittel ausgebildet, die in Rastaufnahmen der Kanäle befestigbar sind. Hierbei ist es auf vorteilhafte Weise möglich, auch über lange Zeiträume zahlreiche Offnungs- und Verschließvorgänge durchzuführen, ohne dass die Verschlusssicherheit der Kanäle leidet.

Bei einer weiteren vorteilhaften Ausführungsform der Erfindung sind die koextrudierten Gelenkbereiche aus weichem Kunststoffmaterial gebildet. Vorzugsweise kann in diesem Zusammenhang weiches Polyvinylchlorid (PVC) eingesetzt werden. Dieses Material hat bezüglich der Verarbeitbarkeit wie auch der Langzeitbeständigkeit Vorteile, dass bei einer weiteren vorteilhaften Ausführungsform auch die an der Wand anliegenden oberen und unteren Randbereiche der Sichtfläche aus diesem Material gebildet sein können.

Die Ausbildung der Sockelleiste, mit Ausnahme der Gelenk- und Wandbereiche aus Acrylnitrit-Butadien-Styrol-Terpolymere (ABS) ist deshalb besonders vorteilhaft, weil dieses Material sehr vorteilhafte Materialeigenschaften aufweist. So weist dieses Material eine hohe Schlag- und Kerbschlagzähigkeit, eine Kratz- und Härtezähigkeit, eine hohe Formbeständigkeit u.a. auf.

Weitere Vorteile der Erfindung ergeben sich aus dem nachfolgenden Unteranspruch sowie aus der Beschreibung der Ausführungsbeispiele. Es zeigen:
- Fig. 1: eine Schnittdarstellung einer erfindungsgemäßen Sockelleiste im nicht montierten Verschlusszustand,
- Fig. 2: eine Sockelleiste gemäß Fig. 1 mit geöffneten Verschlussleisten im montierten Zustand,
- Fig. 3 - Fig. 7: Schnittdarstellungen von beispielhaften Klemm- bzw. Rastmitteln der Verschlussleisten.

In den Figuren ist eine Sockelleiste insgesamt mit der Bezugsziffer 10 bezeichnet.

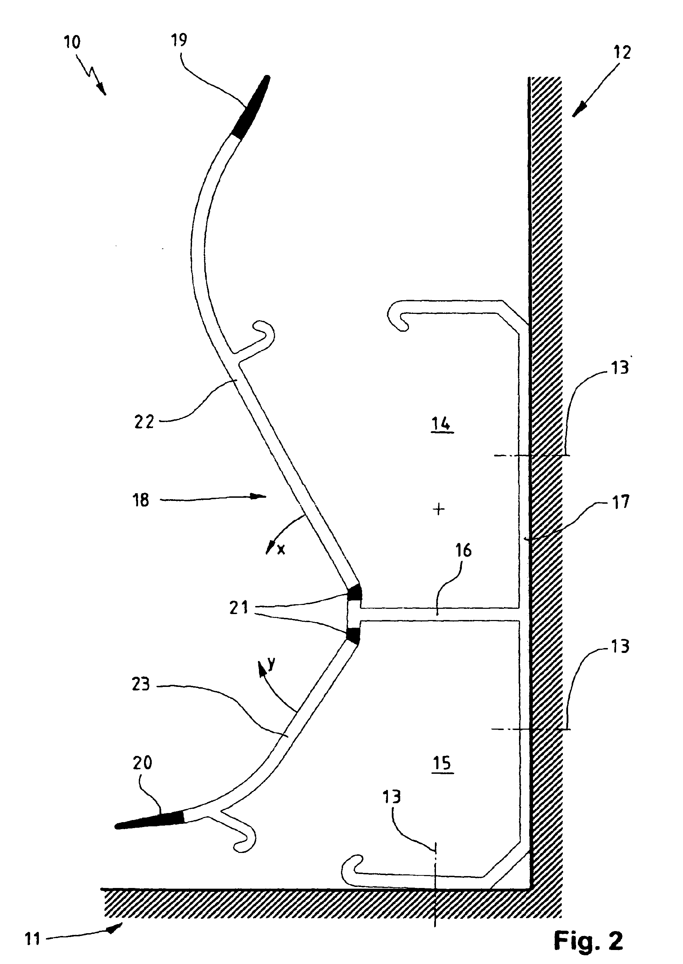

Die Sockelleiste 10 ist in einem Eckbereich des in einem Boden 11 und einer Wand 12, beispielsweise durch Klebung oder durch Befestigungsschrauben 13 an der Wand 12 und/oder Boden 11 (S. Fig. 2), angeordnet. Die Sockelleiste 10 weist zwei Kabelkanäle 14 und 15 auf, welche durch eine Zwischenwand 16 unterbrochen sind und eine gemeinsame Rückwand 17 ausbildet.

Die Sockelleiste 10 ist in den Raum weisend mit einer Sichtfläche 18 versehen, die einen oberen Rand 19 und einen unteren Rand 20 aufweist, welche aus Weichkunststoff, vorzugsweise PVC, gebildet wird und elastisch an der Wand 12 bzw. im Boden 11 anliegt.

Beidseitig gering beabstandet von der Zwischenwand 16 ist die Sichtfläche 18 mit aus Weichkunststoff, vorzugsweise PVC koextrudierten Gelenkbereichen 21 für Verschlussleisten 22 und 23 versehen. Grundsätzlich ist es jedoch auch möglich, die Verschlussleisten 22 und 23 jeweils über eine Filmnaht gelenkig an der Sockelleiste 10 anzuordnen.

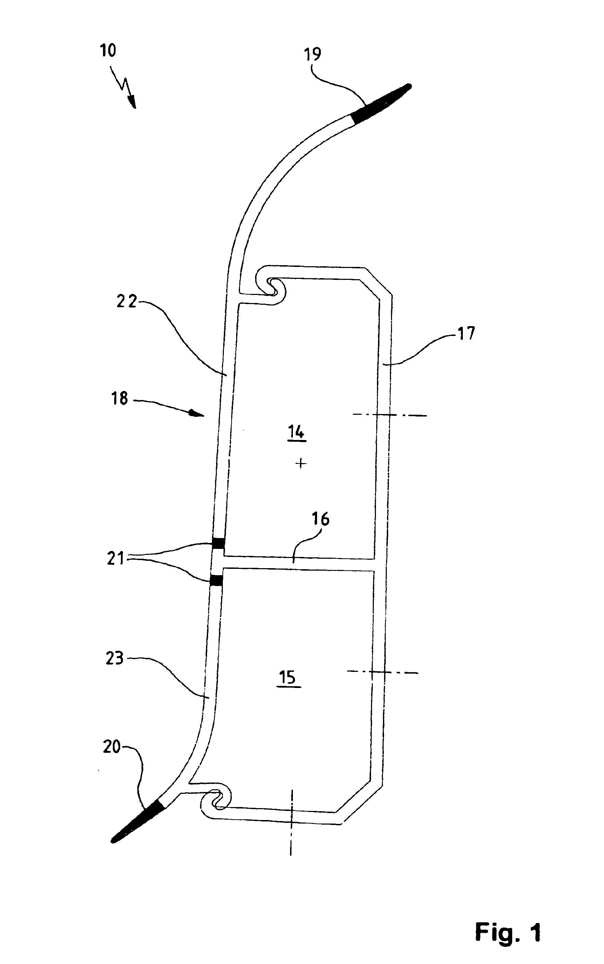

In der Fig. 1 ist gut zu erkennen, dass sich die Verschlussleisten 22 und 23 gegenläufig in x- und y-Richtung öffnen.

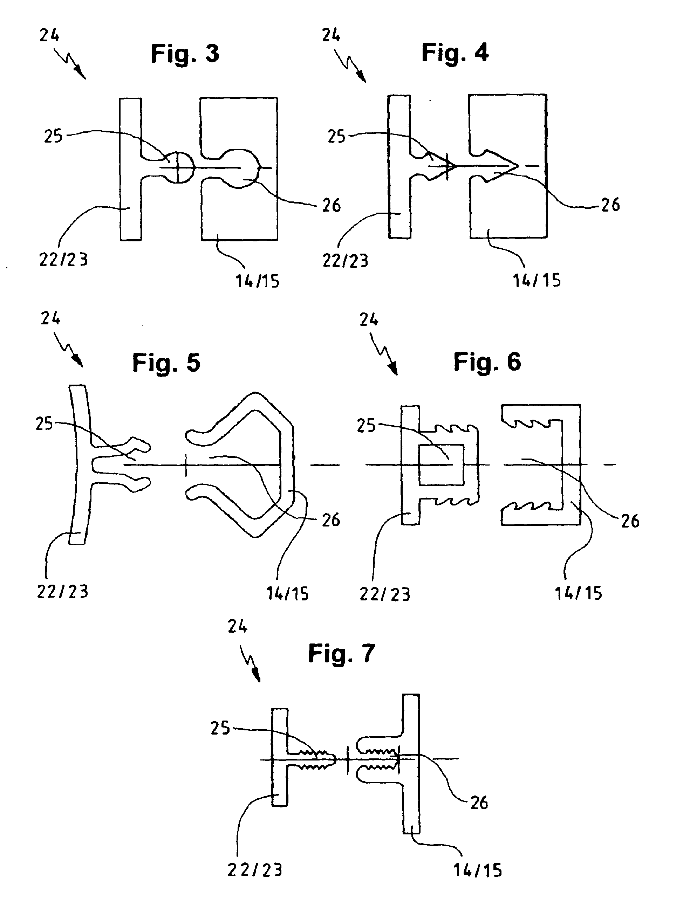

Letztlich zeigen die Fig. 3 - Fig. 7 beispielhafte Rast- bzw. Klemmmittel 24, welche aus Rastmitteln 25 und Rastaufnahmen 26 gebildet werden. So sind die Rastmittel 25 den Verschlussleisten 22/23 zugeordnet, während die Rastaufnahmen 26 Teil der Kabelkanäle 14 bzw. 15 sind.

## Patentansprüche

1. Leistenartige Vorrichtung (10) zur Montage im Übergangsbereich zwischen Boden (11) und Wand (12) bzw. Möbelstück und Wand - auch Sockelleiste genannt - mit einer zum Beispiel an einen Bodenbelag angepassten, von der Wand beabstandeten Sichtftäche (18), deren oberer (19) sowie unterer Randbereich (20) möglichst abdichtend an der Wand anlegbar ist sowie einem im Hohlraum zwischen Wand und Sichtfläche angeordneten Kanal zur Aufnahme von Kabeln od. dgl., dessen Rückwand der Befestigung der Sockelleiste an der Wand dient und dessen Vorderwand als stoffschlüssig, mittels eines koextrudierten Gelenkbereichs aus Weichkunststoff angeordnete Verschlussleiste ausgebildet ist, **dadurch gekennzeichnet, dass** zwischen Sichtfläche (18) und Wand (12) zwei den Hohlraum ausnutzende Kanäle (14, 15) mit zwei getrennten Verschlussleisten ubereinander ausgebildet sind, deren koextrudierte Gelenkbereiche (21) gering voneinander beabstandet nahe einer Zwischenwand (16) zwischen den Kanälen (14, 15) angeordnet sind und dass die beiden Verschlussleisten (22, 23) eine gegenläufige Öffnungsrichtung (x, y) aufweisen.

2. Vorrichtung nach Anspruch 1, **dadurch gekennzeichnet, dass** die Verschlussleisten (22, 23) mit linienhaften Klemm- bzw. Rastmitteln versehen sind, die in Rastaufnahmen der Kanäle (14, 15) befestigbar sind.

3. Vorrichtung nach Anspruch 1 oder 2, **dadurch gekennzeichnet, dass** die koextrudierten Gelenkbereiche (21) aus weichem Kunststoffmaterial gebildet werden.

4. Vorrichtung nach Anspruch 3, **dadurch gekennzeichnet, dass** die koextrudierten Gelenkbereiche (21) vorrangig aus weichem Polyvinylchlorid (PVC) gebildet werden.

5. Vorrichtung nach einem der vorangehenden Ansprüche, **dadurch gekennzeichnet, dass** der an der Wand (12) anliegende obere und untere Randbereich (19 und 20) der Sichtfläche (18) aus Weich-PVC gebildet ist.

6. Vorrichtung nach einem der vorangehenden Ansprüche, **dadurch gekennzeichnet, dass** die Sockelleiste (10), mit Ausnahme der gelenk- und Randbereiche, aus Acrylnitrit-Butadien-Styrol-Terpolymere (ABS) gebildet sind.

7. Vorrichtung nach einem der vorangehenden Ansprüche, **dadurch gekennzeichnet, dass** im Bereich der Rückwände der Kanäle (14, 15) weit voneinander beabstandete Befestigungsbereiche angeordnet sind.

## Claims

1. Strip-like device (10) for mounting in the transition region between the floor (11) and the wall (12) and/or an item of furniture and the wall - also known as a plinth - comprising a visible surface (18) which is adapted, for example, to a floor covering and which is spaced apart from the wall, the upper edge region (19) and lower edge region (20) thereof being able to be positioned against the wall as far as possible in a sealing manner, as well as a duct arranged in the cavity between the wall and the visible surface for receiving cables or the like, the rear wall of said duct being used for fastening the plinth to the wall and the front wall thereof being configured as a sealing strip which is arranged by means of a coextruded joint region made of soft plastics material in a manner which produces a material connection, **characterised in that** two ducts (14, 15) which comprise two separate sealing strips and which utilise the cavity are arranged on top of one another between the visible surface (18) and the wall (12), the coextruded joint regions (21) thereof being arranged slightly spaced apart from one another in the vicinity of an intermediate wall (16) between the ducts (14, 15) and **in that** the two sealing strips (22, 23) have an opening direction (x, y) which extends in opposing directions.

2. Device according to Claim 1, **characterised in that** the sealing strips (22, 23) are provided with linear clamping means and/or latching means, which may be fastened in latching receivers of the ducts (14, 15).

3. Device according to Claim 1 or 2, **characterised in that** the coextruded joint regions (21) are formed from soft plastics material.

4. Device according to Claim 3, **characterised in that** the coextruded joint regions (21) are primarily formed from soft polyvinylchloride (PVC).

5. Device according to one of the preceding claims, **characterised in that** the upper and lower edge region (19 and 20) of the visible surface (18) bearing against the wall (12) is formed from soft PVC.

6. Device according to one of the preceding claims, **characterised in that** the plinth (10), with the exception of the joint regions and edge regions, is formed from acrylonitrile butadiene styrene (ABS) terpolymers.

7. Device according to one of the preceding claims, **characterised in that** fastening regions are arranged spaced far apart from one another in the region of the rear walls of the ducts (14, 15).

## Revendications

1. Dispositif (10) du genre d'une bande, destiné au montage dans la zone de transition entre le sol (11) et le mur (12), ou entre une pièce de meuble et un mur - également appelé bande de socle -, avec une face visible (18), espacée du mur, adaptée par exemple à un revêtement de sol, dont la zone de bordure supérieure (19), ainsi qu'inférieure (20), est susceptible d'être appliquée, avec effet d'étanchéité, sur le mur, ainsi qu'avec un canal, disposé dans un espace creux entre mur et face visible, pour recevoir des câbles ou analogues, dont la paroi arrière sert à la fixation de la bande de socle sur le mur et dont la paroi avant est réalisée sous forme de bande de fermeture, faisant intervenir une liaison par la matière, au moyen d'une zone d'articulation coextrudée, réalisée en matière synthétique souple, **caractérisé en ce que**, entre face visible (18) et mur (12), sont réalisés, l'un au-dessus de l'autre, deux canaux (14, 15), exploitant l'espace creux, avec deux bandes de fermeture séparées, dont les zones d'articulation (21) coextrudées sont disposées à faible distance les unes des autres, près d'une paroi intermédiaire (16) entre les canaux (14, 15), et **en ce que** les deux bandes de fermeture (22, 23) présentent un sens d'ouverture (x, y) opposé.

2. Dispositif selon la revendication 1, **caractérisé en ce que** les bandes de fermeture (22, 23) sont munies de moyens de serrage ou d'encliquetage linéaires, susceptibles d'être fixés dans des logements d'encliquetage des canaux (14, 15).

3. Dispositif selon la revendication 1 ou 2, **caractérisé en ce que** les zones d'articulation (21) coextrudées sont formées de matière synthétique souple.

4. Dispositif selon la revendication 3, **caractérisé en ce que** les zones d'articulation (21) coextrudées sont prioritairement formées de polychlorure de vinyle (PVC).

5. Dispositif selon l'une des revendications précédentes, **caractérisé en ce que** les zones de bordure supérieure et inférieure (19 et 20), appliquées sur le mur (12), de la face visible (18) sont formées de PVC.

6. Dispositif selon l'une des revendications précédentes, **caractérisé en ce que** la bande de socle (10), à l'exception des zones d'articulation et de bordure, est formée de terpolymère acylonitrile-butadiène-styrène (ABS).

7. Dispositif selon l'une des revendications précédentes, **caractérisé en ce que** des zones de fixation espacées loin les unes des autres sont disposées dans la zone des parois arrières des canaux (14, 15).
